# EUROPEAN PATENT APPLICATION

(11) **EP 4 712 618 A1**
(43) Date of publication of application: **18.03.2026**
(21) Application number: 24814228.3
(22) Date of filing: 20.05.2024
(51) Int. Cl.: H04W 72/044

(54) **SIDELINK COMMUNICATION METHOD AND APPARATUS AND COMMUNICATION SYSTEM**

(30) Priority: 26.05.2023 CN 202310613303
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN); WU, Hao, Shenzhen, Guangdong 518129 (CN)
(74) Representative: Gill Jennings & Every LLP
(86) International application number: PCT/CN2024/094217
(87) International publication number: WO 2024/245029

(57) **Abstract**

This application discloses a sidelink communication method, an apparatus, and a communication system, and relates to the field of wireless communication technologies. The method includes: A first terminal device indicates time in which a second terminal device sends sidelink information or a resource used by the second terminal device to send the sidelink information, to prevent a plurality of terminal devices from sending sidelink information to the first terminal device in overlapping time, so that the first terminal device can receive, based on non-overlapping time, the sidelink information sent by the plurality of terminal devices, to improve quality of sidelink communication between the terminal devices.

## Description

This application claims priority to Chinese Patent Application No. 202310613303.X, filed with the China National Intellectual Property Administration on May 26, 2023 and entitled "SIDELINK COMMUNICATION METHOD, APPARATUS, AND COMMUNICATION SYSTEM", which is incorporated herein by reference in its entirety.

### TECHNICAL FIELD

This application relates to the field of wireless communication technologies, and in particular, to a sidelink communication method, an apparatus, and a communication system.

### BACKGROUND

In a wireless communication system, user equipments (user equipments, UE) may not need to communicate with each other through a radio access network device (for example, a next generation NodeB (next generation NodeB, gNB)), that is, sidelink (Sidelink, SL) communication is performed between UEs. For example, in a vehicle to everything (Vehicle to Everything, V2X) scenario, data is transmitted between a plurality of vehicles based on a sidelink.

Usually, a reception user equipment (Reception UE, Rx UE) may perform sidelink communication with a plurality of transmission user equipments (Transmission UE, Tx UE), and the plurality of Tx UEs transmit data based on different transmission beams (Tx beam). When the Rx UE performs directional reception based on a beam, if a capability of the Rx UE is limited, the Rx UE may not be able to perform directional reception based on a plurality of reception beams (Rx beam) simultaneously, or may perform directional reception only via a limited quantity of reception beams. Consequently, the Rx UE cannot receive data sent by some Tx UEs, and quality of sidelink communication performed between user equipments is compromised.

### SUMMARY

This application provides a sidelink communication method, an apparatus, and a communication system, to resolve a problem that a terminal device with a limited capability cannot perform directional reception based on a plurality of reception beams simultaneously, thereby improving quality of sidelink communication between terminal devices.

According to a first aspect, a sidelink communication method is provided. The method may be applied to a terminal device, or the method may be applied to a communication apparatus that supports a terminal device to implement the method. For example, the communication apparatus includes a chip system. The method includes: sending first information, and receiving, based on the first information, sidelink information sent by a second terminal device, where the first information indicates time information corresponding to sidelink communication between a second terminal device and a first terminal device, the second terminal device includes one or a plurality of terminal devices, and the plurality of terminal devices correspond to different first information.

In this way, the first terminal device sends non-overlapping time information to the plurality of terminal devices, to prevent the plurality of terminal devices from sending sidelink information to the first terminal device in overlapping time, so that the first terminal device can receive, based on non-overlapping time, the sidelink information sent by the plurality of terminal devices, to improve quality of sidelink communication between the terminal devices.

In a possible implementation, sending the first information includes: sending the first information when a quantity of reception beams corresponding to a first link is greater than a preset threshold, where the first link is a sidelink between the second terminal device and the first terminal device, and the preset threshold is a maximum quantity of reception beams that can be simultaneously used by the first terminal device for directional reception.

Therefore, the first terminal device sends the non-overlapping time information to the plurality of terminal devices, to prevent the plurality of terminal devices from sending the sidelink information to the first terminal device based on a plurality of transmission beams in the overlapping time, so that the first terminal device can receive, based on different reception beams in the non-overlapping time, the sidelink information sent by the plurality of terminal devices, to improve the quality of the sidelink communication between the terminal devices.

In another possible implementation, the first information includes discontinuous reception (Discontinuous Reception, DRX) assistance information.

In another possible implementation, the first terminal device receives the sidelink information of the plurality of terminal devices in different time. The plurality of terminal devices correspond to different reception beams.

According to a second aspect, a sidelink communication method is provided. The method may be applied to a terminal device, or the method may be applied to a communication apparatus that supports a terminal device to implement the method. For example, the communication apparatus includes a chip system. The method includes: determining inter-user equipment coordination (Inter-UE coordination, IUC) information, and sending the IUC information to a second terminal device, where the IUC information is used by the second terminal device to determine a resource used for sending sidelink information to a first terminal device.

In a possible implementation, the IUC information includes a non-preferred resource set (Non-preferred resource set) or a preferred resource set (preferred resource set), the non-preferred resource set includes a reserved resource of a third terminal device, a resource included in the preferred resource set does not overlap the reserved resource of the third terminal device, and the third terminal device performs sidelink communication with the first terminal device.

In this way, the IUC information sent by the first terminal device is used by the second terminal device to determine the resource used for sending the sidelink information to the first terminal device, so that the second terminal device is prevented from sending the sidelink information to the first terminal device in overlapping time in which the third terminal device reserves the resource, to improve quality of sidelink communication between the terminal devices.

In another possible implementation, a reception beam corresponding to the second terminal device is different from a reception beam corresponding to the third terminal device.

According to a third aspect, a sidelink communication method is provided. The method may be applied to a terminal device, or the method may be applied to a communication apparatus that supports a terminal device to implement the method. For example, the communication apparatus includes a chip system. The method includes: determining that a first physical sidelink feedback channel (Physical Sidelink feedback channel, PSFCH) resource of a second terminal device overlaps a PSFCH resource of a third terminal device; and sending a second PSFCH resource to the second terminal device, where the second PSFCH resource does not overlap the PSFCH resource of the third terminal device, the second terminal device performs sidelink communication with a first terminal device, and the third terminal device performs sidelink communication with the first terminal device.

In this way, the first terminal device sends a new PSFCH resource to the second terminal device, to prevent the second terminal device and the third terminal device from sending PSFCHs to the first terminal device in overlapping time because used the PSFCH resources overlap, so that the first terminal device can receive, based on different PSFCH resources, the PSFCHs sent by the second terminal device and the third terminal device, to improve quality of sidelink communication between the terminal devices.

In a possible implementation, the first PSFCH resource is obtained based on a mapping relationship between a physical sidelink shared channel (Physical Sidelink shared channel, PSSCH) and a PSFCH.

According to a fourth aspect, a sidelink communication method is provided. The method may be applied to a terminal device, or the method may be applied to a communication apparatus that supports a terminal device to implement the method. For example, the communication apparatus includes a chip system. The method includes: determining a first PSSCH resource of a second terminal device, where a PSFCH resource corresponding to the first PSSCH resource does not overlap a PSFCH resource of a third terminal device, the second terminal device performs sidelink communication with a first terminal device, and the third terminal device performs sidelink communication with the first terminal device; and sending the first PSSCH resource to the second terminal device.

In this way, when the first terminal device determines a PSSCH resource used for sending sidelink information to the second terminal device, it is ensured that a PSFCH resource to which the PSSCH resource is mapped does not overlap a PSFCH resource of another terminal device, to prevent the second terminal device and the third terminal device from sending PSFCHs to the first terminal device in overlapping time, so that the first terminal device can receive, based on different resources, the PSFCHs sent by the second terminal device and the third terminal device, to improve quality of sidelink communication between the terminal devices.

In a possible implementation, the sidelink communication between the second terminal device and the first terminal device is hybrid automatic repeat request HARQ feedback disabled.

According to a fifth aspect, a sidelink communication method is provided. The method may be applied to a terminal device, or the method may be applied to a communication apparatus that supports a terminal device to implement the method. For example, the communication apparatus includes a chip system. The method includes: determining that a first condition is satisfied; and receiving, in a high frequency range in an omnidirectional receiving manner, sidelink information sent by a second terminal device, where the second terminal device includes one or a plurality of terminal devices.

In this way, when a corresponding condition is satisfied, sidelink information sent by a plurality of terminal devices is received in an omnidirectional receiving manner, that is, a manner of receiving the sidelink information is flexibly selected based on the condition, to avoid a case in which the first terminal device cannot receive the sidelink information sent by the plurality of terminal devices to the first terminal device in overlapping time, and improve quality of sidelink communication between the terminal devices.

In a possible implementation, the first condition includes at least one of the following: signal quality corresponding to a first link is greater than or equal to a first threshold, and the first link is a sidelink between the second terminal device and a first terminal device; a distance corresponding to the first link is less than or equal to a second threshold; a priority corresponding to the first link is lower than or equal to a first priority; a quantity of reception beams corresponding to the first link is greater than a third threshold; and an interest in receiving the sidelink information in a multicast or broadcast manner.

In another possible implementation, the third threshold is a maximum quantity of reception beams that can be simultaneously used by the first terminal device for directional reception.

In another possible implementation, the first terminal device receives the sidelink information sent by the plurality of terminal devices in different times. The plurality of terminal devices correspond to different reception beams.

According to a sixth aspect, a sidelink communication method is provided. The method may be applied to a terminal device, or the method may be applied to a communication apparatus that supports a terminal device to implement the method. For example, the communication apparatus includes a chip system. The method includes: determining that resources corresponding to a plurality of reception beams overlap; and receiving sidelink information based on a first reception beam in the plurality of reception beams.

In this way, when learning in advance that PSSCH resources corresponding to the plurality of reception beams overlap, a first terminal device selects a relatively important reception beam to receive the sidelink information, to avoid a case in which the first terminal device cannot receive relatively important sidelink information because a plurality of terminal devices send sidelink information to the first terminal device in overlapping time, so that the first terminal device can select the reception beam to receive the relatively important sidelink information, to improve quality of sidelink communication between the terminal devices.

In a possible implementation, the resource includes one of a PSSCH resource and a PSFCH resource.

In another possible implementation, the first reception beam includes at least one of the following: in the plurality of reception beams, a reception beam with a highest priority or M reception beams with priorities in descending order; in the plurality of reception beams, a reception beam that corresponds to a maximum quantity of links or M reception beams with quantities of links in descending order; in the plurality of reception beams, a reception beam with lowest signal quality or M reception beams with signal quality in descending order; and in the plurality of reception beams, a reception beam corresponding to a longest link distance or M reception beams with longest link distances in descending order, where M is a maximum quantity of reception beams that can be simultaneously used by the first terminal device for directional reception.

According to a seventh aspect, a sidelink communication method is provided. The method may be applied to a terminal device, or the method may be applied to a communication apparatus that supports a terminal device to implement the method. For example, the communication apparatus includes a chip system. The method includes: receiving a first message sent by a second terminal device, where the first message indicates to request to establish a sidelink connection to a first terminal device; determining that receiving of sidelink information sent by the second terminal device is not supported; and sending a second message to the second terminal device, where the second message indicates to reject establishment of the sidelink connection to the second terminal device.

In this way, the first terminal device learns in advance that a new reception beam may not be able to be used to receive sidelink information for establishing a unicast connection, and chooses to reject establishment of the unicast connection, to avoid a case in which the first terminal device cannot receive the sidelink information sent by the second terminal device, and improve quality of sidelink communication between the terminal devices.

In a possible implementation, determining that receiving of the sidelink information sent by the second terminal device is not supported includes: when a reception beam corresponding to the second terminal device is different from a reception beam currently used by the first terminal device, determining that receiving of the sidelink information sent by the second terminal device is not supported.

According to an eighth aspect, a communication apparatus is provided. For beneficial effect, refer to descriptions in the first aspect. Details are not described herein again. The communication apparatus has a function of implementing the behavior in the method embodiment in the first aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The transceiver unit is configured to send first information, where the first information indicates time information corresponding to sidelink communication performed between a second terminal device and a first terminal device, the second terminal device includes one or a plurality of terminal devices, and the plurality of terminal devices correspond to different first information; and the transceiver unit is configured to receive, based on the first information, sidelink information sent by the second terminal device.

In a possible implementation, the transceiver unit is specifically configured to send the first information when a quantity of reception beams corresponding to a first link is greater than a preset threshold, where the first link is a sidelink between the second terminal device and the first terminal device.

In another possible implementation, the first information includes DRX assistance information.

In another possible implementation, a plurality of terminal devices correspond to different reception beams.

According to a ninth aspect, a communication apparatus is provided. For beneficial effect, refer to descriptions in the second aspect. Details are not described herein again. The communication apparatus has a function of implementing the behavior in the method embodiment in the second aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The processing unit is configured to determine IUC information, where the IUC information is used by a second terminal device to determine a resource used for sending sidelink information to a first terminal device; and the transceiver unit is configured to send the IUC information to the second terminal device.

In a possible implementation, the IUC information includes a non-preferred resource set or a preferred resource set, the non-preferred resource set includes a reserved resource of a third terminal device, a resource included in the preferred resource set does not overlap the reserved resource of the third terminal device, and the third terminal device performs sidelink communication with the first terminal device.

In another possible implementation, a reception beam corresponding to the second terminal device is different from a reception beam corresponding to the third terminal device.

According to a tenth aspect, a communication apparatus is provided. For beneficial effect, refer to descriptions in the third aspect. Details are not described herein again. The communication apparatus has a function of implementing the behavior in the method embodiment in the third aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The processing unit is configured to determine that a first physical sidelink feedback channel PSFCH resource of a second terminal device overlaps a PSFCH resource of a third terminal device, where the second terminal device performs sidelink communication with a first terminal device, and the third terminal device performs sidelink communication with the first terminal device; and the transceiver unit is configured to send a second PSFCH resource to the second terminal device, where the second PSFCH resource does not overlap the PSFCH resource of the third terminal device.

In a possible implementation, the first PSFCH resource is obtained based on a mapping relationship between a physical sidelink shared channel PSSCH and a PSFCH.

According to an eleventh aspect, a communication apparatus is provided. For beneficial effect, refer to descriptions in the fourth aspect. Details are not described herein again. The communication apparatus has a function of implementing the behavior in the method embodiment in the fourth aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The processing unit is configured to determine a first physical sidelink shared channel PSSCH resource of a second terminal device, where a PSFCH resource corresponding to the first PSSCH resource does not overlap a PSFCH resource of a third terminal device, the second terminal device performs sidelink communication with a first terminal device, and the third terminal device performs sidelink communication with the first terminal device; and the transceiver unit is configured to send the first PSSCH resource to the second terminal device.

In a possible implementation, the sidelink communication between the second terminal device and the first terminal device are hybrid automatic repeat request (Hybrid automatic repeat request, HARQ) feedback disabled.

According to a twelfth aspect, a communication apparatus is provided. For beneficial effect, refer to descriptions in the fifth aspect. Details are not described herein again. The communication apparatus has a function of implementing the behavior in the method embodiment in the fifth aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The processing unit is configured to determine that a first condition is satisfied; and the transceiver unit is configured to receive, in a high frequency range in an omnidirectional receiving manner, sidelink information sent by a second terminal device, where the second terminal device includes one or a plurality of terminal devices.

In a possible implementation, the first condition includes at least one of the following: signal quality corresponding to a first link is greater than or equal to a first threshold, and the first link is a sidelink between the second terminal device and a first terminal device; a distance corresponding to the first link is less than or equal to a second threshold; a priority corresponding to the first link is lower than or equal to a first priority; a quantity of reception beams corresponding to the first link is greater than a third threshold; and an interest in receiving the sidelink information in a multicast or broadcast manner.

In another possible implementation, the third threshold is a maximum quantity of reception beams that can be simultaneously used by the first terminal device for directional reception.

According to a thirteenth aspect, a communication apparatus is provided. For beneficial effect, refer to descriptions in the sixth aspect. Details are not described herein again. The communication apparatus has a function of implementing the behavior in the method embodiment in the sixth aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The processing unit is configured to determine that resources corresponding to a plurality of reception beams overlap; and the transceiver unit is configured to receive sidelink information based on a first reception beam in the plurality of reception beams.

In a possible implementation, the resource includes one of a physical sidelink shared channel PSSCH resource and a physical sidelink feedback channel PSFCH resource.

In another possible implementation, the first reception beam includes at least one of the following: in the plurality of reception beams, a reception beam with a highest priority or M reception beams with priorities in descending order; in the plurality of reception beams, a reception beam that corresponds to a maximum quantity of links or M reception beams with quantities of links in descending order; in the plurality of reception beams, a reception beam with lowest signal quality or M reception beams with signal quality in descending order; and in the plurality of reception beams, a reception beam corresponding to a longest link distance or M reception beams with longest link distances in descending order, where M is a maximum quantity of reception beams that can be simultaneously used by the first terminal device for directional reception.

According to a fourteenth aspect, a communication apparatus is provided. For beneficial effect, refer to descriptions in the seventh aspect. Details are not described herein again. The communication apparatus has a function of implementing the behavior in the method embodiment in the seventh aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The transceiver unit is configured to receive a first message sent by a second terminal device, where the first message indicates to request to establish a sidelink connection to a first terminal device; the processing unit is configured to determine that receiving of sidelink information sent by the second terminal device is not supported; and the transceiver unit is configured to send a second message, where the second message indicates to reject establishment of the sidelink connection to the second terminal device.

In a possible implementation, the processing unit is specifically configured to: when a reception beam corresponding to the second terminal device is different from a reception beam currently used by the first terminal device, determine that receiving of the sidelink information sent by the second terminal device is not supported.

According to a fifteenth aspect, a communication apparatus is provided. The communication apparatus may be the terminal device in the foregoing method embodiments, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a sixteenth aspect, a chip system is provided. The chip system includes a processor, configured to implement the functions of the terminal device in the method in the foregoing aspects. In a possible design, the chip system further includes a memory, configured to store program instructions and/or data. The chip system may include a chip, or may include a chip and another discrete component.

According to a seventeenth aspect, a computer program product is provided. The computer program product includes computer program code; and when the computer program code is run, the method performed by the terminal device in the foregoing aspects is performed.

According to an eighteenth aspect, a computer-readable storage medium is provided. The computer-readable storage medium stores a computer program; and when the computer program is run, the method performed by the terminal device in the foregoing aspects is implemented.

According to a nineteenth aspect, a communication system is provided. The communication system includes a plurality of terminal devices, configured to perform the method performed by the terminal device in the foregoing aspects, to implement sidelink communication between the plurality of terminal devices.

In this application, names of the terminal device and the communication apparatus constitute no limitation on the devices. During actual implementation, the devices may have other names. Provided that functions of the devices are similar to those in this application, the devices fall within the scope of the claims of this application and equivalent technologies thereof.

In this application, based on the implementations provided in the foregoing aspects, the implementations may be further combined to provide more implementations.

### BRIEF DESCRIPTION OF DRAWINGS

FIG. 1 is a diagram of sidelink communication according to this application;
FIG. 2 is a diagram of a vehicle to everything scenario according to this application;
FIG. 3 is a diagram of low-frequency and high-frequency communication according to this application;
FIG. 4 is a diagram of beam pairing according to this application;
FIG. 5 is a diagram of sidelink communication according to this application;
FIG. 6 is a diagram of an architecture of a communication system according to this application;
FIG. 7 is a flowchart of a sidelink communication method according to this application;
FIG. 8 is a flowchart of another sidelink communication method according to this application;
FIG. 9 is a flowchart of another sidelink communication method according to this application;
FIG. 10 is a flowchart of another sidelink communication method according to this application;
FIG. 11 is a flowchart of another sidelink communication method according to this application;
FIG. 12 is a flowchart of another sidelink communication method according to this application;
FIG. 13 is a flowchart of another sidelink communication method according to this application;
FIG. 14 is a flowchart of another sidelink communication method according to this application;
FIG. 15 is a flowchart of another sidelink communication method according to this application;
FIG. 16 is a diagram of a structure of a communication apparatus according to this application; and
FIG. 17 is a diagram of a structure of another communication apparatus according to this application.

### DESCRIPTION OF EMBODIMENTS

For clear and brief description of the following embodiments, brief descriptions of a related technology are first provided.

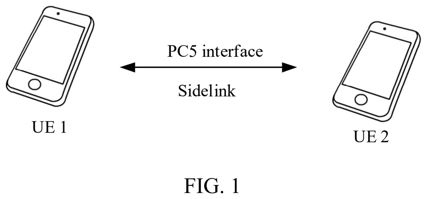

**A sidelink (Sidelink,** SL) is a link between user equipments (user equipments, UE). For example, as shown in FIG. 1, in a wireless communication system, sidelink communication is performed between UEs, and an interface between a UE 1 and a UE 2 is referred to as a PC5 interface, which is similar to a Uu interface between a UE and a radio access network device. Direct communication is performed between UEs not through a radio access network device (for example, a next generation NodeB (next generation NodeB, gNB)), that is, sidelink communication is performed between the UEs. Optionally, sidelink communication may be replaced and described as SL communication.

One transmission user equipment (Transmission UE, Tx UE) may perform sidelink communication with a plurality of reception user equipments (Reception UEs, Rx UE). One Rx UE may also perform sidelink communication with a plurality of Tx UEs. It may be understood that sidelink communication may be performed between the UEs in a unicast manner, a multicast manner, or a broadcast manner.

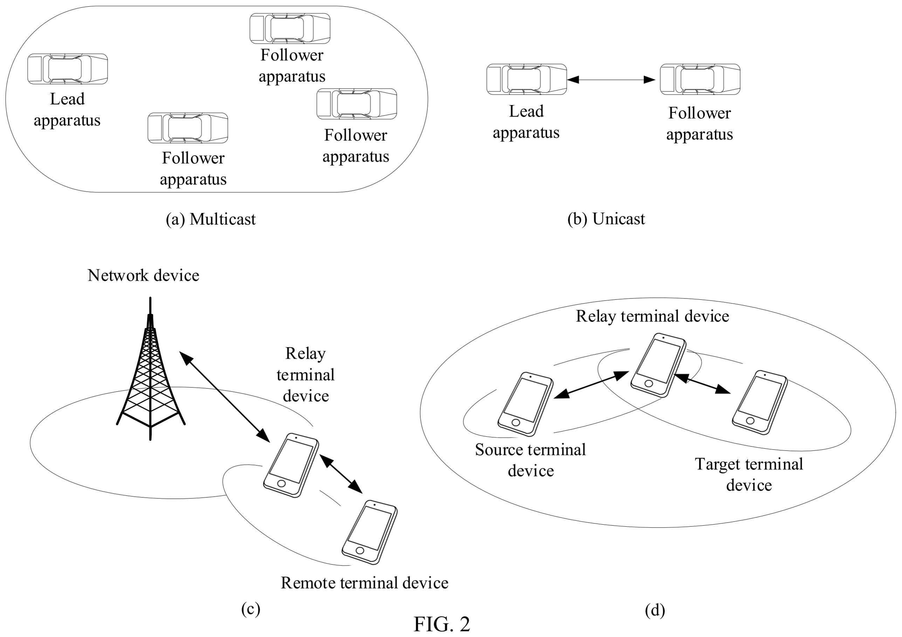

An application scenario of sidelink communication includes vehicle to everything (Vehicle to Everything, V2X). In the vehicle to everything scenario, a vehicle may be a UE, and data is directly transmitted between vehicles based on a sidelink not through a network. In this way, a communication delay can be effectively reduced. The vehicles can communicate with each other in a unicast or multicast manner based on a communication service requirement. For example, in a vehicle platooning (platooning) service, vehicles that travel in a same direction and are close to each other may form a vehicle platoon. As shown in (a) in FIG. 2, a vehicle in a vehicle platoon may send corresponding data to another member vehicle (a follower apparatus) in the vehicle platoon in a multicast manner. As shown in (b) in FIG. 2, a lead vehicle (a lead apparatus) may establish a unicast communication connection to a member vehicle (a follower apparatus) in a unicast manner, and transmit data to the member vehicle in a one-to-one manner.

Optionally, an application scenario of sidelink communication further includes communication between a remote terminal device (Remote UE) and a relay terminal device (Relay UE) in a sidelink UE-to-network relay scenario (shown in (c) in FIG. 2), and communication between a source terminal device (Source UE) and a relay terminal device and communication between the relay terminal device and a target terminal device (target UE) in a sidelink UE-to-UE relay scenario (shown in (d) in FIG. 2).

**Directional reception** may mean that a reception end receives, based on a beam, information sent by a transmission end.

**Omnidirectional reception** may mean that a reception end receives, without based on a beam, information sent by a transmission end.

**A beam (beam)** is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent via different beams. Optionally, a plurality of beams having a same or similar communication feature may be considered as one beam. One beam may include one or more antenna ports, configured to transmit a data channel, a control channel, a sounding signal, and the like. For example, a transmission beam may be signal strength distribution formed in different directions in space after a signal is transmitted out through an antenna, and a reception beam may be signal strength distribution in different directions in space of a radio signal received through an antenna. It may be understood that one or more antenna ports forming one beam may also be considered as one antenna port set.

Beams may be classified into a transmission beam and a reception beam of a network device and a transmission beam and a reception beam of a terminal device. The transmission beam of the network device is used to describe beamforming information on a transmission side of the network device. The reception beam of the network device is used to describe beamforming information on a reception side of the network device. The transmission beam of the terminal device is used to describe beamforming information on a transmission side of the terminal device. The reception beam of the terminal device is used to describe beamforming information on a reception side of the terminal device. In other words, the beam is used to describe beamforming information.

The beam may correspond to a time resource, a space resource, and/or a frequency domain resource.

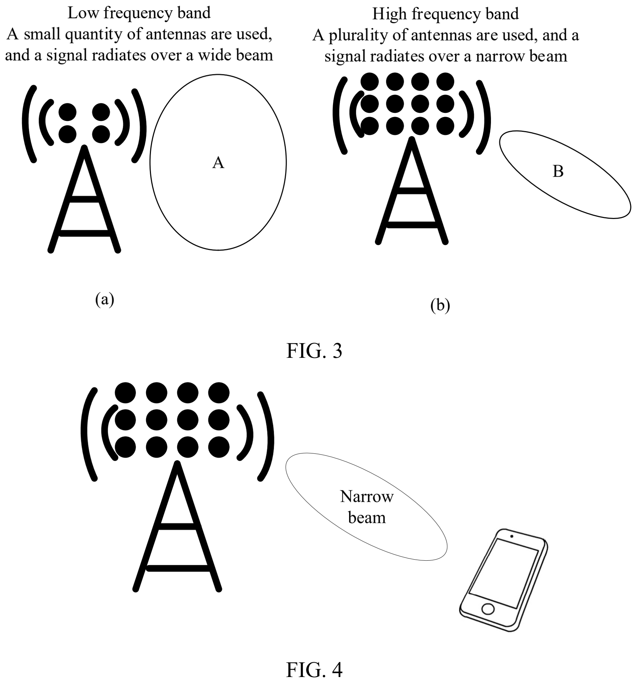

**High-frequency communication** is also referred to as short-wave communication or millimeter-wave communication, namely, "wireless communication" with a wavelength ranging from 10 m to 100 m (a frequency ranging from 3 MHz to 30 MHz). In high-frequency communication, a high-frequency signal features in a high frequency, fast attenuation, and limited coverage. A base station may aggregate transmitted energy to one direction by using a narrow beam method, to increase a transmission distance, and the base station also expands a sending direction by using a time division scanning method. As shown in (a) in FIG. 3, a base station sends a signal based on a low frequency band by using a small quantity of antennas, and the signal radiates in a wide beam. As shown in (b) in FIG. 3, a base station sends a signal based on a high frequency band by using a plurality of antennas, and the signal radiates in a narrow beam.

The wireless access device may send a signal in a beam sweeping manner, and the terminal device may also receive a signal in a beam sweeping manner. In some embodiments, as shown in FIG. 4, a base station sends a signal via a specific narrow beam, and a terminal device receives a signal via a specific reception beam. Quality of a signal that can be received by the terminal device is good. If an appropriate pair of transmission and reception beams can be found, after sweeping ends, the terminal device may perform subsequent signal transmission via this appropriate beam pair, to obtain optimal communication quality. Beam management is involved to find the appropriate beam pair. Beam pairing between the base station and the terminal device may be implemented by using a series of procedures of beam sweeping, beam measurement and reporting, and beam indication of beam management.

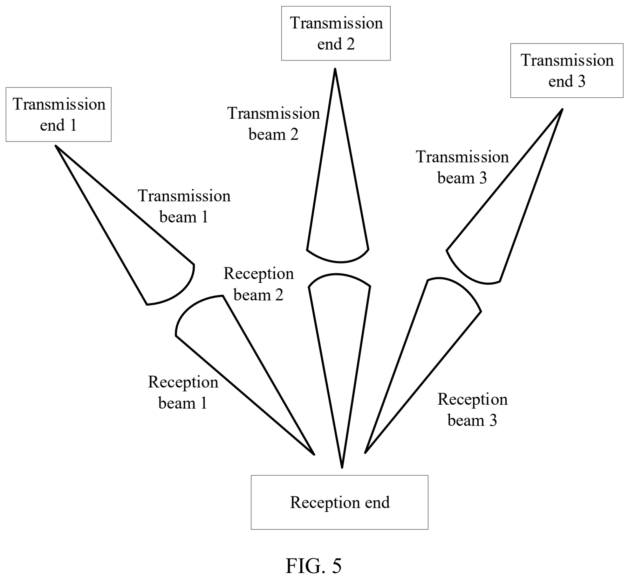

In some embodiments, when sidelink communication is performed between terminal devices, in a high frequency range, sidelink information may be sent based on a transmission beam and the sidelink information may be received based on a reception beam. For example, as shown in FIG. 5, a transmission end 1 sends sidelink information to a reception end based on a transmission beam 1, and the reception end receives, based on a reception beam 1, the sidelink information sent by the transmission end 1; a transmission end 2 sends sidelink information to a reception end based on a transmission beam 2, and the reception end receives, based on a reception beam 2, the sidelink information sent by the transmission end 2; and a transmission end 3 sends sidelink information to a reception end based on a transmission beam 3, and the reception end receives, based on a reception beam 3, the sidelink information sent by the transmission end 3.

To resolve a problem that a capability-limited terminal device cannot perform directional reception based on a plurality of reception beams simultaneously, and improve quality of sidelink communication between terminal devices, in a sidelink communication method provided in this application, a first terminal device indicates time in which a second terminal device sends sidelink information or a resource used by the second terminal device to send the sidelink information, to prevent a plurality of terminal devices from sending sidelink information to the first terminal device in overlapping time, so that the first terminal device can receive, based on non-overlapping time, the sidelink information sent by the plurality of terminal devices, to improve quality of sidelink communication between the terminal devices.

The sidelink communication method provided in this application may be applied to a 4th generation (4th generation, 4G) communication system, for example, long term evolution (Long Term Evolution, LTE), or may be applied to a 5th generation (fifth generation, 5G) communication system, for example, 5G new radio (new radio, NR), or may be applied to various future evolved communication systems, for example, a 6th generation (6th generation, 6G) communication system, an air-sea-ground integrated communication system, or an integrated access and backhaul (integrated access and backhaul, IAB) scenario. It may be understood that the system architecture and the application scenario described in this application are intended to describe the technical solutions of this application more clearly, and do not constitute a limitation on the technical solutions provided in this application.

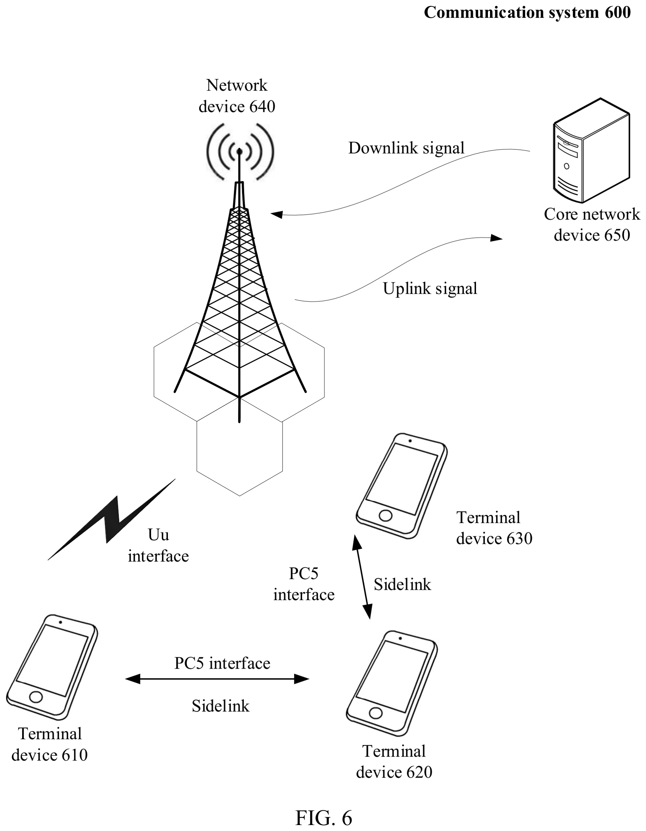

FIG. 6 is a diagram of an architecture of a communication system according to this application. As shown in FIG. 6, the communication system 600 includes a plurality of terminal devices (for example, a terminal device 610, a terminal device 620, and a terminal device 630). The plurality of terminal devices perform sidelink communication. It may be understood that the plurality of terminal devices performing sidelink communication may mean that the plurality of terminal devices perform communication based on a sidelink, or the plurality of terminal devices perform communication through a sidelink, or the plurality of terminal devices perform sidelink communication. The communication system 600 may further include a network device 640 and a core network device 650. The terminal device is connected to the network device in a wireless manner, and the network device is connected to the core network device in a wireless manner or a wired manner. The core network device and the network device may be different physical devices independent of each other; functions of the core network device and logical functions of the network device may be integrated into a same physical device; or some functions of the core network device and some functions of the network device may be integrated into one physical device. The terminal device may be located at a fixed location, or may be mobile. FIG. 6 is merely an example diagram. The communication system may further include another network device, for example, may further include a wireless relay device and a wireless backhaul device, which are not shown in FIG. 6. Quantities of core network devices, network devices, and terminal devices included in the communication system are not limited in embodiments of this application.

The network device is an access device that is used by the terminal device to access the communication system in a wireless manner, and may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. The network device may alternatively be a module or a unit that completes some functions of the base station, for example, may be a central unit (central unit, CU), or may be a distributed unit (distributed unit, DU). A specific technology and a specific device form that are used by the network device are not limited in this application. The network device may also be referred to as a radio access network device. Unless otherwise specified, the network device is the radio access network device. For example, the network device 640 may be referred to as a radio access network device 640.

The terminal device may also be referred to as a terminal, a user equipment (user equipment, UE), a mobile station (mobile station, MS), a mobile terminal (mobile terminal, MT), or the like, or is a device that provides voice or data connectivity for a user, or may be an internet of things device. For example, the terminal device includes a handheld device, a vehicle-mounted device, or the like that has a wireless connection function. The terminal device may be a mobile phone (mobile phone), a tablet computer (Pad), a notebook computer, a palmtop computer, a mobile internet device (mobile internet device, MID), a wearable device (for example, a smartwatch, a smart band, or a pedometer), a vehicle-mounted device (for example, a car, a bicycle, an electric vehicle, an airplane, a ship, a train, or a high-speed railway), a computer having a wireless transceiver function, a virtual reality terminal device, an augmented reality terminal device, a wireless terminal in industrial control, a wireless terminal in self-driving, or a wireless terminal in a remote surgery, a wireless terminal in a smart grid, a wireless terminal in transportation security, a wireless terminal in a smart city, a wireless terminal in a smart home, a smart home device (for example, a refrigerator, a television, an air conditioner, or an electric meter), or the like. It should be understood that the terminal device in this application may alternatively be a chip in the terminal device, or may be a communication apparatus, a unit, or a module that has a user equipment to user equipment (UE to UE, U2U) communication function, for example, a vehicle-mounted communication apparatus, a vehicle-mounted communication module, or a vehicle-mounted communication chip. In this application, the terminal device may alternatively be a road side unit (road side unit) in a vehicle to everything communication system, or may be a communication apparatus or a communication chip in the road side unit. The method provided in this application may be performed by the terminal device, or may be performed by a component (for example, a processor, a chip, or a chip system) of the terminal device. An entity that performs the method in this application may also be referred to as a communication apparatus. The communication apparatus may be the terminal device or the component (for example, the processor, the chip, or the chip system) of the terminal device. A specific technology and a specific device form that are used by the terminal device are not limited in this application.

The network device and the terminal device may be deployed on the land, including an indoor device, an outdoor device, a handheld device, or a vehicle-mounted device; may be deployed on the water surface; or may be deployed on an airplane, a balloon, and an artificial satellite in the air. Application scenarios of the network device and the terminal device are not limited in embodiments of this application.

Communication between terminal devices and communication between the network device and the terminal device may be performed by using a licensed spectrum (licensed spectrum), an unlicensed spectrum (unlicensed spectrum), or both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between terminal devices is not limited in embodiments of this application.

In embodiments of this application, a time domain symbol may be an orthogonal frequency division multiplexing (orthogonal frequency division multiplexing, OFDM) symbol, or may be a single carrier-frequency division multiplexing (single carrier-frequency division multiplexing, SC-FDM) symbol. Unless otherwise specified, all symbols in embodiments of this application are time domain symbols.

A first terminal device sends sidelink information to a second terminal device based on a physical sidelink shared channel (Physical Sidelink shared channel, PSSCH). The second terminal device sends feedback information to the first terminal device based on a physical sidelink feedback channel (Physical Sidelink feedback channel, PSFCH). For example, the feedback information may be HARQ information.

It may be understood that, in embodiments of this application, a PSFCH and a PSSCH are merely used as examples of an uplink data channel and a downlink data channel, and a data channel may have different names in different systems and different scenarios. This is not limited in embodiments of this application.

The following describes in detail, with reference to the accompanying drawings, implementations of sidelink communication provided in this application. Herein, an example in which the first terminal device communicates with the second terminal device through a sidelink is used for description. The first terminal device and the second terminal device may be the terminal devices shown in FIG. 6.

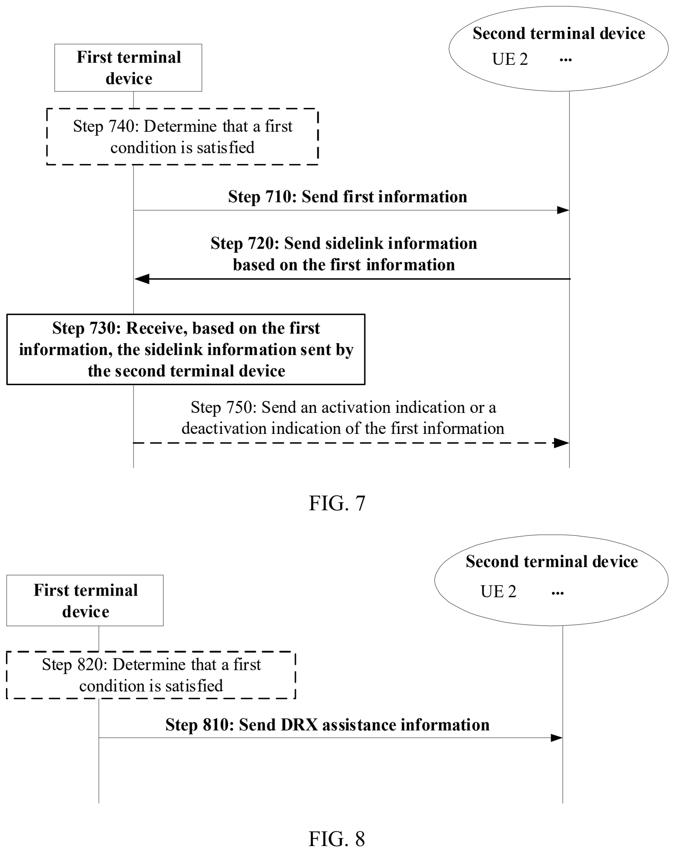

In a first possible implementation, the first terminal device needs to receive sidelink information sent by the second terminal device, and the first terminal device indicates time in which the second terminal device sends the sidelink information. FIG. 7 is a flowchart of a sidelink communication method according to this application. As shown in FIG. 7, the method may include the following steps.

**Step 710: The first terminal device sends first information to the second terminal device.**

The first information indicates time information corresponding to sidelink communication performed between the second terminal device and the first terminal device. That the second terminal device performs sidelink communication with the first terminal device may be replaced with that the second terminal device and the first terminal device communicate through a sidelink, or the second terminal device and the first terminal device perform sidelink communication, or the second terminal device communicates with the first terminal device through a sidelink.

It may be understood that the time information indicates the time in which the first terminal device receives the sidelink information sent by the second terminal device, or may be described as that the first terminal device receives, in the time corresponding to the time information, the sidelink information sent by the second terminal device. The sidelink information includes instructions, data, or the like. It may be understood that the time information indicates the time in which the second terminal device sends the sidelink information to the first terminal device, or may be described as that the second terminal device sends the sidelink information to the first terminal device in the time corresponding to the time information. The sidelink information includes instructions, data, or the like. It may be understood that the sidelink communication includes sidelink sending and/or sidelink receiving.

For example, the time information is a time division multiplexing pattern (TDM pattern).

For example, the time information is an allowed slot (allowed slots).

The second terminal device sends the sidelink information to the first terminal device, the second terminal device may be used as a transmission apparatus, and the first terminal device may be used as a reception apparatus. The second terminal device may indicate one terminal device or may indicate a plurality of terminal devices, that is, the second terminal device includes one or a plurality of terminal devices. A quantity of second terminal devices is not limited in this application. If the second terminal device includes a plurality of terminal devices, the first terminal device communicates with the plurality of terminal devices through a sidelink.

In some embodiments, if the first terminal device communicates with the plurality of terminal devices through the sidelink, the first terminal device sends the first information to the plurality of terminal devices. The plurality of terminal devices correspond to different first information.

Optionally, that the plurality of terminal devices correspond to different first information may also be understood as that time corresponding to time information of the plurality of terminal devices does not overlap.

Optionally, the plurality of terminal devices correspond to different reception beams. To be specific, the first terminal device receives, based on the different reception beams, sidelink information sent by the plurality of terminal devices. Different reception beams correspond to different first information of the terminal devices. It may also be understood as that time corresponding to time information of the terminal devices corresponding to different reception beams does not overlap.

Being different may be being partially different, and not overlap may be not overlap at all or not completely overlap. Not overlap at all may mean that the time corresponding to the time information of the plurality of terminal devices does not intersect. Not completely overlap may mean that the time corresponding to the time information of the plurality of terminal devices partially intersect.

For example, if the first terminal device communicates with a third terminal device through a sidelink, the first terminal device communicates with a fourth terminal device through a sidelink, and the first terminal device receives sidelink information sent by the third terminal device and sidelink information sent by the fourth terminal device, the first terminal device separately sends first information to the third terminal device and the fourth terminal device, and the third terminal device and the fourth terminal device correspond to different first information. In other words, the first terminal device receives, in non-overlapping time, the sidelink information sent by the second terminal device and the sidelink information sent by the fourth terminal device.

For example, assuming that a terminal device 620 in FIG. 6 communicates with a terminal device 610 through a sidelink, the terminal device 620 communicates with a terminal device 630 through a sidelink, and the terminal device 620 receives sidelink information sent by the terminal device 610 and sidelink information sent by the terminal device 630; and the terminal device 620 is used as a reception apparatus, and both the terminal device 610 and the terminal device 630 are used as transmission apparatuses, the terminal device 620 separately sends first information to the terminal device 610 and the terminal device 630, and the terminal device 610 and the terminal device 630 correspond to different first information. In other words, the terminal device 620 receives, in non-overlapping time, the sidelink information sent by the terminal device 610 and the sidelink information sent by the terminal device 630.

Optionally, the first terminal device sends the time information to the second terminal device by using a message such as a radio resource control (Radio Resource Control, RRC) message, a sidelink media access control control element (Sidelink Media Access Control Control Element, SL MAC CE), or sidelink control information (Sidelink Control Information, SCI).

**Step 720: The second terminal device sends the sidelink information to the first terminal device based on the first information.**

The second terminal device receives the first information sent by the first terminal device, and sends the sidelink information to the first terminal device based on the time information. For example, the second terminal device sends the sidelink information to the first terminal device in the time corresponding to the time information indicated by the first information.

**Step 730: The first terminal device receives, based on the first information, the sidelink information sent by the second terminal device.**

The first terminal device receives, based on the time corresponding to the time information indicated by the first information, the sidelink information sent by the second terminal device.

Optionally, the second terminal device includes a plurality of terminal devices, and the plurality of terminal devices correspond to different first information. The plurality of terminal devices send sidelink information to the first terminal device in non-overlapping time corresponding to the time information indicated by the first information. The first terminal device receives, based on the non-overlapping time corresponding to the time information indicated by the first information, the sidelink information sent by the plurality of terminal devices. For example, the third terminal device sends sidelink information to the first terminal device in first time, the fourth terminal device sends sidelink information to the first terminal device in second time, and the first time and the second time do not overlap. The first terminal device receives, in the first time, the sidelink information sent by the third terminal device, and the first terminal device receives, in the second time, the sidelink information sent by the fourth terminal device.

Optionally, when determining that a first condition is satisfied, the first terminal device sends the first information. That is, before step 710, the method may further include step 740: The first terminal device determines that the first condition is satisfied. The first condition includes at least one of the following:
(1) Signal quality corresponding to a first link is greater than or equal to a first threshold. The first link is a sidelink between the second terminal device and the first terminal device. The first threshold is a maximum quantity of reception beams that can be simultaneously used by the first terminal device for directional reception.

It may be understood that the first link may include one or more sidelinks. Optionally, the first link includes a sidelink corresponding to unicast communication. Optionally, the first link includes a sidelink corresponding to communication performed by using a low frequency or a high frequency. Optionally, the first link includes all sidelinks to the first terminal device. Optionally, the first link may be a sidelink corresponding to a priority that corresponds to transport block/sidelink control information (Transport block/Sidelink Control Information, TB/SCI) received by the first terminal device and that is lower than or equal to a first priority.

The plurality of sidelinks included in the first link may be sidelinks between the first terminal device and the plurality of terminal devices. The first information is sent when signal quality corresponding to at least one of the plurality of sidelinks is greater than or equal to the first threshold, for example, a first sidelink between the third terminal device and the first terminal device, and a second sidelink between the fourth terminal device and the first terminal device. The first information is sent when signal quality of the first sidelink is greater than or equal to the first threshold. Alternatively, the first information is sent when signal quality of the second sidelink is greater than or equal to the first threshold. Alternatively, the first information is sent when signal quality of the first sidelink is greater than or equal to the first threshold, and signal quality of the second sidelink is greater than or equal to the first threshold.

The signal quality may be at least one of a reference signal received power (Reference Signal Received Power, RSRP), reference information received quality (Reference signal receiving quality, RSRQ), a signal to interference plus noise ratio (Signal to interference plus noise ratio, SINR), a received signal strength indication (Received signal strength indication, RSSI), and the like.

The first terminal device may determine, based on at least one of the RSRP, the RSRQ, the SINR, and the RSSI, the signal quality corresponding to the first link. For example, the first terminal device may determine, based on the RSRP, the signal quality corresponding to the first link, or the first terminal device may determine, based on the RSRP and the RSRQ, the signal quality corresponding to the first link. When both the RSRP and the RSRQ corresponding to the first link are greater than or equal to the threshold, the first information is sent to the second terminal device. The RSRP, the RSRQ, the SINR, and the RSSI may respectively correspond to different thresholds.

(2) A distance corresponding to the first link is less than or equal to a second threshold. The distance corresponding to the first link may be a distance between two terminal devices corresponding to a sidelink.

Optionally, the distance corresponding to the first link may be determined by using zone (zone) information included in SCI and location information of the first terminal device.

Optionally, the distance corresponding to the first link may be determined by performing sidelink positioning on the first link.

The link may also be replaced with a target/destination (destination) or a unicast connection. Optionally, the destination may be a destination L2 ID or a destination L1 ID.

The plurality of sidelinks included in the first link may be sidelinks between the first terminal device and the plurality of terminal devices. The first information is sent when a distance corresponding to at least one of the plurality of sidelinks is less than or equal to the second threshold, for example, a first sidelink between the third terminal device and the first terminal device, and a second sidelink between the fourth terminal device and the first terminal device. The first information is sent when a distance corresponding to the first sidelink is less than or equal to the second threshold. Alternatively, the first information is sent when a distance corresponding to the second sidelink is less than or equal to the second threshold. Alternatively, the first information is sent when a distance corresponding to the first sidelink is less than or equal to the second threshold, and a distance corresponding to the second sidelink is less than or equal to the second threshold.

(3) A priority corresponding to the first link is lower than or equal to a first priority. It may be understood that the priority corresponding to the first link may be a priority of the TB/SCI received on the first link. A smaller priority value indicates a higher priority and a more important link. The priority may be an L1 priority or a channel access priority class (Channel access priority class, CAPC) priority. It may be understood that all parameters (a threshold, a priority, and the like) may be determined in a manner of being predefined, network-configured, configured by a terminal device, or the like.

The plurality of sidelinks included in the first link may be sidelinks between the first terminal device and the plurality of terminal devices. The first information is sent when a priority corresponding to at least one of the plurality of sidelinks is lower than or equal to the first priority, for example, a first sidelink between the third terminal device and the first terminal device, and a second sidelink between the fourth terminal device and the first terminal device. The first information is sent when a priority corresponding to the first sidelink is lower than or equal to the first priority. Alternatively, the first information is sent when a priority corresponding to the second sidelink is lower than or equal to the first priority. Alternatively, the first information is sent when a priority corresponding to the first sidelink is lower than or equal to the first priority, and a priority corresponding to the second sidelink is lower than or equal to the first priority.

(4) A quantity of reception beams corresponding to the first link is greater than a third threshold, where the third threshold is a maximum quantity of reception beams that can be simultaneously used by the first terminal device for directional reception.

Optionally, the first link herein includes all of the one or more sidelinks.

(5) Interest in receiving the sidelink information in a multicast or broadcast manner. For example, an upper layer indicates, to an access stratum, a destination (destination), corresponding to a multicast or broadcast, that the upper layer is interested in receiving. Optionally, the multicast or broadcast may be a multicast or broadcast for sidelink communication performed between the first terminal device and the plurality of terminal devices in a high frequency range.

Optionally, the first terminal device may further send an activation indication or a deactivation indication of the first information to the second terminal device. That is, after step 730, step 750 may be further included.

Optionally, the first terminal device sends the activation indication or the deactivation indication of the first information by using an SL MAC CE or SCI.

It may be understood that the activation indication of the first information indicates one or more pieces of time information used by the second terminal device. For example, the first information in step 710 includes a plurality of pieces of time information, and the activation indication of the first information in step 750 specifically indicates the second terminal device to use first time information in the plurality of pieces of time information.

It may be understood that the deactivation indication of the first information indicates time information not used by the second terminal device. For example, the first information in step 710 includes a plurality of pieces of time information, and the deactivation indication of the first information in step 750 specifically indicates the second terminal device not to use first time information in the plurality of pieces of time information.

In this way, the first terminal device sends non-overlapping time information to the plurality of terminal devices, to prevent the plurality of terminal devices from sending sidelink information to the first terminal device in overlapping time, so that the first terminal device can receive, based on non-overlapping time, the sidelink information sent by the plurality of terminal devices, to improve quality of sidelink communication between the terminal devices.

In a second possible implementation, the first terminal device needs to receive sidelink information sent by the second terminal device, and the first terminal device indicates DRX assistance information of the second terminal device. FIG. 8 is a flowchart of a sidelink communication method according to this application. As shown in FIG. 8, the method may include the following step.

**Step 810: The first terminal device sends the DRX assistance information to the second terminal device.**

The DRX assistance information is used to determine, to the first terminal device, a DRX configuration sent by the second terminal device, and includes information about a parameter of the preferred DRX configuration. It may be understood that the DRX assistance information includes one or more of preferred sl-drx-onDurationTimer information, preferred sl-drx-CycleStartOffset information, and preferred sl-drx-SlotOffset information.

The second terminal device includes one or a plurality of terminal devices, and the first terminal device communicates with the plurality of terminal devices through a sidelink.

In some embodiments, if the first terminal device communicates with the plurality of terminal devices through the sidelink, the first terminal device sends first information to the plurality of terminal devices. The plurality of terminal devices correspond to different DRX assistance information.

Optionally, active time (active time) of the DRX assistance information corresponding to the plurality of terminal devices is different or does not overlap.

Optionally, active time (active time) corresponding to the sl-drx-onDurationTimer information in the DRX assistance information corresponding to the plurality of terminal devices is different or does not overlap.

For example, a third terminal device communicates with the first terminal device through a sidelink, a fourth terminal device communicates with the first terminal device through a sidelink, and the first terminal device separately sends DRX assistance information to the third terminal device and the fourth terminal device. Active time corresponding to sl-drx-onDurationTimer in the DRX assistance information of the third terminal device is different from or does not overlap active time corresponding to sl-drx-onDurationTimer in the DRX assistance information of the fourth terminal device.

Optionally, different reception beams correspond to DRX assistance information of the terminal devices.

Optionally, active time corresponding to the DRX assistance information of the terminal devices corresponding to different reception beams is different or does not overlap.

Optionally, active time (active time) corresponding to the sl-drx-onDurationTimer information in the DRX assistance information of the terminal devices corresponding to different reception beams is different or does not overlap.

Optionally, the DRX assistance information is carried in a UE assistance information sidelink (UE Assistance Information Sidelink) message.

Optionally, the second terminal device receives the DRX assistance information sent by the first terminal device, and sends the sidelink information to the first terminal device based on time corresponding to the DRX assistance information. For example, the second terminal device sends the sidelink information to the first terminal device in the time corresponding to the DRX assistance information.

Optionally, the first terminal device receives, based on the time corresponding to the DRX assistance information, the sidelink information sent by the second terminal device.

Optionally, when determining that a first condition is satisfied, the first terminal device sends the DRX assistance information. That is, before step 810, the method may further include step 820: The first terminal device determines that the first condition is satisfied. For explanations of the first condition, refer to descriptions in the first possible implementation.

In this way, the first terminal device sends different DRX assistance information to the plurality of terminal devices, to prevent the plurality of terminal devices from sending sidelink information to the first terminal device in overlapping time, so that the first terminal device can receive, based on non-overlapping time, the sidelink information sent by the plurality of terminal devices, to improve quality of sidelink communication between the terminal devices.

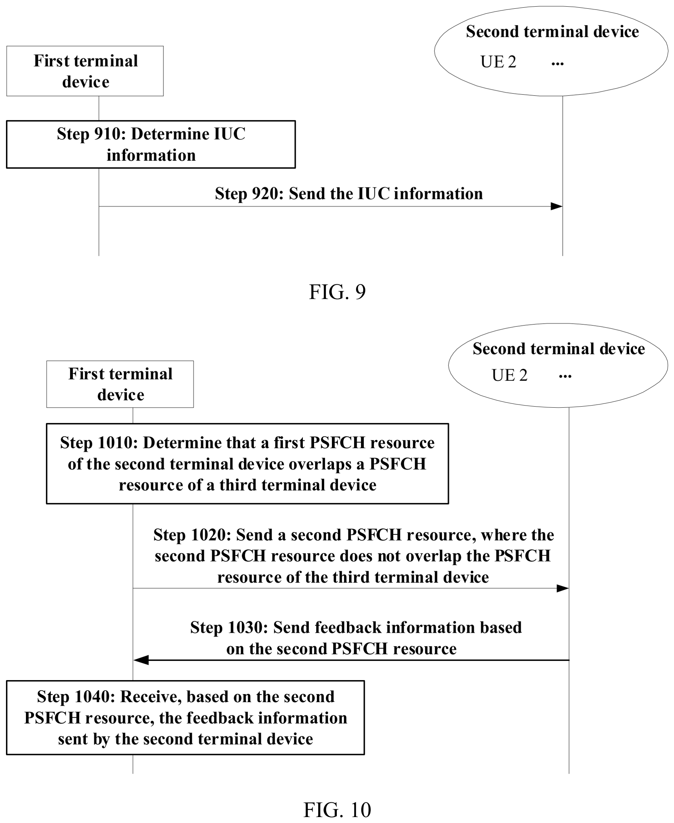

In a third possible implementation, the first terminal device needs to receive sidelink information sent by the second terminal device, and the first terminal device sends IUC information to the second terminal device to determine a resource used for sending the sidelink information. FIG. 9 is a flowchart of a sidelink communication method according to this application. As shown in FIG. 9, the method may include the following steps.

**Step 910: The first terminal device determines the IUC information.**

The IUC information is used by the second terminal device to determine the resource used for sending the sidelink information to the first terminal device.

In some embodiments, the IUC information includes a non-preferred resource set (non-preferred resource set) or a preferred resource set (preferred resource set). A resource included in the non-preferred resource set represents a resource that cannot be used by the terminal device that receives the IUC information. A resource included in the preferred resource set represents a resource that can be used by the terminal device that receives the IUC information.

For example, the second terminal device communicates with the first terminal device through a sidelink, and a third terminal device communicates with the first terminal device through a sidelink. The first terminal device sends a first non-preferred resource set to the second terminal device, where the first non-preferred resource set includes a resource reserved by the third terminal device, to prevent the second terminal device from sending the sidelink information to the first terminal device by using the resource reserved by the third terminal device. The first terminal device sends a second non-preferred resource set to the third terminal device, where the second non-preferred resource set includes a resource reserved by the second terminal device, to prevent the third terminal device from sending the sidelink information to the first terminal device by using the resource reserved by the second terminal device.

For example, the first terminal device sends a first preferred resource set to the second terminal device, where a resource included in the first preferred resource set does not overlap the resource reserved by the third terminal device, and the first preferred resource set includes a resource that does not overlap the resource reserved by the third terminal device, so that the second terminal device is prevented from sending the sidelink information to the first terminal device by using the resource reserved by the third terminal device.

For example, the first terminal device sends a second preferred resource set to the third terminal device, where a resource included in the second preferred resource set does not overlap the resource reserved by the second terminal device, and the second preferred resource set includes a resource that does not overlap the resource reserved by the second terminal device, so that the third terminal device is prevented from sending the sidelink information to the first terminal device by using the resource reserved by the second terminal device.

It may be understood that the resource includes a time domain resource and/or a frequency domain resource. The reserved resource may include a retransmission resource and/or a periodic resource reserved in SCI.

Optionally, a reception beam corresponding to the second terminal device is different from a reception beam corresponding to the third terminal device. A non-preferred resource indicated by IUC information of a terminal device corresponding to one reception beam includes a resource reserved by a terminal device corresponding to another reception beam, or a preferred resource indicated by IUC information of a terminal device corresponding to one reception beam does not overlap a resource reserved by a terminal device corresponding to another reception beam.

When the resource is a time domain resource, in an example, the IUC information includes first indication information, and the first indication information indicates that all frequency domains/carriers/BWPs/RPs/RB sets corresponding to time-frequency resources included in the IUC information in terms of time are non-preferred resource sets or preferred resource sets. It may be understood that a carrier/BWP/RP/RB set corresponding to a time-frequency resource included in the IUC information in terms of time may be a carrier/BWP/RP/RB set used for transmitting the IUC information or a carrier/BWP/RP/RB set corresponding to the generated IUC information.

**Step 920: Send the IUC information to the second terminal device.**

The first terminal device may send the IUC information in a unicast manner, a multicast manner, or a broadcast manner.

Optionally, the second terminal device receives the IUC information sent by the first terminal device, and sends the sidelink information to the first terminal device based on the resource corresponding to the IUC information. For example, when the IUC information is a preferred resource set, the second terminal device sends the sidelink information to the first terminal device on the resource corresponding to the IUC information.

Optionally, the first terminal device receives, on the resource corresponding to the IUC information, the sidelink information sent by the second terminal device.

Optionally, when determining that a first condition is satisfied, the first terminal device sends the IUC information. For explanations of the first condition, refer to descriptions in the first possible implementation.

In this way, the IUC information sent by the first terminal device is used by the second terminal device to determine the resource used for sending the sidelink information to the first terminal device, so that the second terminal device is prevented from sending the sidelink information to the first terminal device in overlapping time in which the third terminal device reserves the resource, to improve quality of sidelink communication between the terminal devices.

In a fourth possible implementation, the first terminal device determines that a resource used for receiving a PSFCH of the second terminal device overlaps a resource used for receiving another PSFCH, and the first terminal device indicates the second terminal device to send feedback information by using a new resource. FIG. 10 is a flowchart of a sidelink communication method according to this application. It is assumed that the second terminal device performs sidelink communication with the first terminal device, and a third terminal device performs sidelink communication with the first terminal device. As shown in FIG. 10, the method may include the following steps.

**Step 1010: The first terminal device determines that a first PSFCH resource of the second terminal device overlaps a PSFCH resource of the third terminal device.**

The first terminal device needs to receive feedback information sent by the second terminal device, and receive feedback information sent by the third terminal device. The first terminal device determines that the first PSFCH resource of the second terminal device overlaps the PSFCH resource of the third terminal device, which indicates that receiving on the first PSFCH resource of the second terminal device conflicts with receiving on the PSFCH resource of the third terminal device. Consequently, a plurality of terminal devices may send feedback information to the first terminal device in overlapping time. In this case, the first terminal device determines a new PSFCH resource that can be used by the second terminal device, that is, performs step 1020.

Optionally, the first terminal device determines, based on a mapping relationship between a PSSCH and a PSFCH, that the first PSFCH resource overlaps the PSFCH resource of the third terminal device.

Optionally, the PSFCH resource of the third terminal device may include one or more of a PSFCH resource determined based on the mapping relationship between the PSSCH and the PSFCH, a PSFCH resource indicated by the third terminal device to the first terminal device, and a PSFCH resource indicated by the first terminal device to the third terminal device.

It may be understood that overlapping may include time domain overlapping and/or frequency domain overlapping. Overlapping may also include partial overlapping or complete overlapping.

Optionally, sidelink communication corresponding to the first PSFCH resource is HARQ feedback enabled (HARQ feedback enabled), or sidelink communication between the first terminal device and the second terminal device is HARQ feedback enabled (HARQ feedback enabled).

Optionally, sidelink communication corresponding to the PSFCH resource of the third terminal device is HARQ feedback enabled (HARQ feedback enabled), or sidelink communication between the first terminal device and the third terminal device is HARQ feedback enabled (HARQ feedback enabled).

**Step 1020: Send a second PSFCH resource to the second terminal device, where the second PSFCH resource does not overlap the PSFCH resource of the third terminal device.**

**Step 1030: The second terminal device sends feedback information to the first terminal device based on the second PSFCH resource.**

The second terminal device receives the second PSFCH resource sent by the first terminal device, and sends the feedback information to the first terminal device based on the second PSFCH resource. For example, the second terminal device sends HARQ information to the first terminal device on the second PSFCH resource.

**Step 1040: The first terminal device receives, based on the second PSFCH resource, the feedback information sent by the second terminal device.**

The first terminal device receives, based on the second PSFCH resource, the feedback information sent by the second terminal device.

In this way, the first terminal device sends a new PSFCH resource to the second terminal device, to prevent the second terminal device and the third terminal device from sending the feedback information to the first terminal device in overlapping time because used PSFCH resources overlap, so that the first terminal device can receive, based on different PSFCH resources, the feedback information sent by the second terminal device and the third terminal device, to improve quality of sidelink communication between the terminal devices.

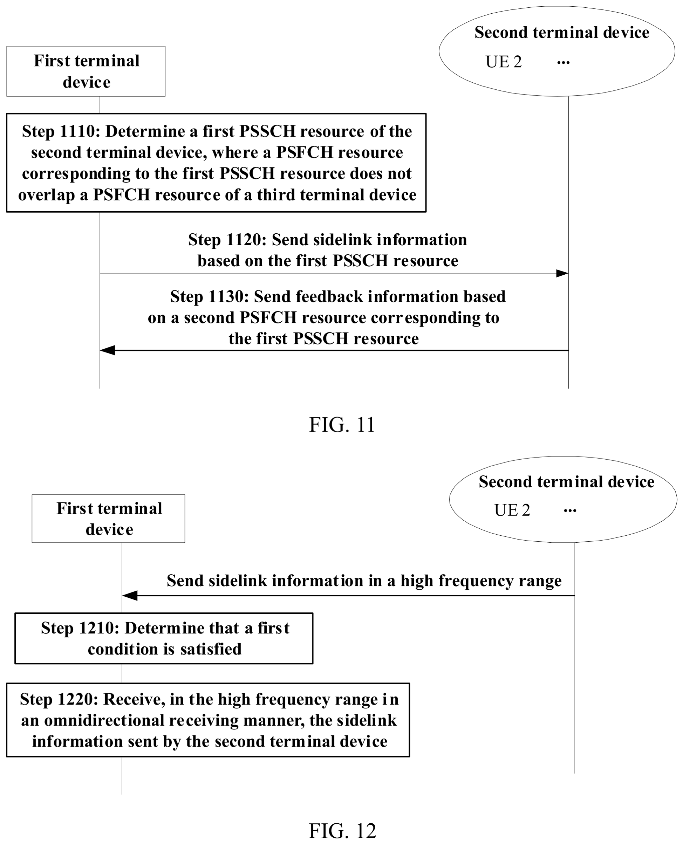

In a fifth possible implementation, the first terminal device needs to send sidelink information to the second terminal device. When a PSSCH resource is selected, it is ensured that a PSFCH resource obtained through PSSCH mapping does not overlap a PSFCH resource used by another terminal device. FIG. 11 is a flowchart of a sidelink communication method according to this application. It is assumed that the second terminal device performs sidelink communication with the first terminal device, and a third terminal device performs sidelink communication with the first terminal device. As shown in FIG. 11, the method may include the following steps.

**Step 1110: The first terminal device determines a first PSSCH resource of the second terminal device, where a PSFCH resource corresponding to the first PSSCH resource does not overlap a PSFCH resource of the third terminal device.**

Before selecting the first PSSCH resource, and sending the sidelink information to the second terminal device based on the first PSSCH resource, if the first terminal device determines that the PSFCH resource corresponding to the first PSSCH resource does not overlap the PSFCH resource of the third terminal device, it indicates that a first PSFCH resource of the second terminal device does not conflict with the PSFCH resource of the third terminal device, and therefore a plurality of terminal devices does not send feedback information to the first terminal device in overlapping time; and step 1120 is performed.

Optionally, if the first terminal device determines that the first PSFCH resource of the second terminal device overlaps the PSFCH resource of the third terminal device, it indicates that the first PSFCH resource of the second terminal device conflicts with the PSFCH resource of the third terminal device, and consequently the plurality of terminal devices may send the feedback information to the first terminal device in the overlapping time. The first terminal device triggers reselection of the PSSCH resource. Triggering reselection of the PSSCH resource may be performed by a MAC layer or by a PHY layer.

Optionally, the first terminal device determines the first PSFCH resource based on a mapping relationship between a PSSCH and a PSFCH.

Optionally, the PSFCH resource of the third terminal device may include one or more of a PSFCH resource determined based on the mapping relationship between the PSSCH and the PSFCH, a PSFCH resource indicated by the third terminal device to the first terminal device, and a PSFCH resource indicated by the first terminal device to the third terminal device.

Optionally, a reception beam corresponding to the second terminal device is different from a reception beam corresponding to the third terminal device.

It may be understood that overlapping may include time domain overlapping and/or frequency domain overlapping. Overlapping may also include partial overlapping or complete overlapping.

Optionally, sidelink communication corresponding to the first PSSCH resource is HARQ feedback enabled (HARQ feedback enabled), or sidelink communication between the first terminal device and the second terminal device is HARQ feedback enabled (HARQ feedback enabled).

Optionally, sidelink communication corresponding to the PSFCH resource of the third terminal device is HARQ feedback enabled (HARQ feedback enabled), or sidelink communication between the first terminal device and the third terminal device is HARQ feedback enabled (HARQ feedback enabled).

**Step 1120: The first terminal device sends the sidelink information to the second terminal device based on the first PSSCH resource.**

**Step 1130: The second terminal device sends feedback information to the first terminal device based on a second PSFCH resource corresponding to the first PSSCH resource.**

The second terminal device sends the feedback information to the first terminal device based on the second PSFCH resource corresponding to the first PSSCH resource. For example, the second terminal device sends the feedback information to the first terminal device on the second PSFCH resource. The third terminal device sends the feedback information to the first terminal device on a third PSFCH resource. The second PSFCH resource does not overlap the third PSFCH resource.

In this way, when the first terminal device determines a PSSCH resource used for sending the sidelink information to the second terminal device, it is ensured that a PSFCH resource to which the PSSCH resource is mapped does not overlap a PSFCH resource of another terminal device, to prevent the second terminal device and the third terminal device from sending feedback information to the first terminal device in overlapping time, so that the first terminal device can receive, based on different resources, the feedback information sent by the second terminal device and the third terminal device, to improve quality of sidelink communication between the terminal devices.

In a sixth possible implementation, in a high frequency range, the first terminal device receives, in an omnidirectional receiving manner or a directional receiving manner, the sidelink information sent by the second terminal device. FIG. 12 is a flowchart of a sidelink communication method according to this application. As shown in FIG. 12, the method may include the following steps.

**Step 1210: The first terminal device determines that a first condition is satisfied.**

The first condition includes at least one of the following: (1) Signal quality corresponding to a first link is greater than or equal to a first threshold. (2) A distance corresponding to the first link is less than or equal to a second threshold. (3) A priority corresponding to the first link is lower than or equal to a first priority. (4) A quantity of reception beams corresponding to the first link is greater than a third threshold, where the third threshold is a maximum quantity of reception beams that can be simultaneously used by the first terminal device for directional reception. (5) Interest in receiving the sidelink information in a multicast or broadcast manner.

For detailed explanations of the first condition, refer to descriptions in the first possible implementation.

**Step 1220: The first terminal device receives, in the high frequency range in the omnidirectional receiving manner, the sidelink information sent by the second terminal device.**

The second terminal device may indicate one terminal device or may indicate a plurality of terminal devices, that is, the second terminal device includes one or a plurality of terminal devices. A quantity of second terminal devices is not limited in this application. If the second terminal device includes a plurality of terminal devices, the first terminal device communicates with the plurality of terminal devices through a sidelink.

The plurality of sidelinks included in the first link may be sidelinks between the first terminal device and the plurality of terminal devices. When at least one of the plurality of sidelinks satisfies at least one of the first condition, the sidelink information sent by the second terminal device is received in the omnidirectional receiving manner,
for example, a first sidelink between a third terminal device and the first terminal device, and a second sidelink between a fourth terminal device and the first terminal device. When signal quality of the first sidelink is greater than or equal to the first threshold, sidelink information sent by the third terminal device and sidelink information sent by the fourth terminal device are received in the omnidirectional receiving manner. Alternatively, when signal quality of the second sidelink is greater than or equal to the first threshold, sidelink information sent by the third terminal device and sidelink information sent by the fourth terminal device are received in the omnidirectional receiving manner. Alternatively, when signal quality of the first sidelink is greater than or equal to the first threshold, and signal quality of the second sidelink is greater than or equal to the first threshold, sidelink information sent by the third terminal device and sidelink information sent by the fourth terminal device are received in the omnidirectional receiving manner.

Optionally, in the high frequency range, if the first terminal device does not satisfy the first condition, the first terminal device receives, in the directional omnidirectional receiving manner, the sidelink information sent by the second terminal device.

When the first condition is not satisfied, the first terminal device determines to perform directional reception via a reception beam with worst signal quality in the first link; or the first terminal device determines to perform directional reception via M reception beams with signal quality in descending order. It may be understood that one reception beam may correspond to one or more sidelinks, in other words, different sidelinks may correspond to a same reception beam. Signal quality of the reception beam may be a maximum value, a minimum value, or an average value of signal quality of all links corresponding to the reception beam.

When the first condition is not satisfied, the first terminal device determines to perform directional reception via a reception beam with a smallest priority value in the first link; or the first terminal device determines to perform directional reception via M reception beams with priorities in descending order. It may be understood that a priority of the reception beam may be a maximum value, a minimum value, or an average value of priorities of all links corresponding to the reception beam. Optionally, a smaller priority value indicates a higher priority corresponding to the priority value.

In this way, when a corresponding condition is satisfied, sidelink information sent by a plurality of terminal devices is received in an omnidirectional receiving manner, that is, a manner of receiving the sidelink information is flexibly selected based on the condition, to avoid a case in which the first terminal device cannot receive the sidelink information sent by the plurality of terminal devices to the first terminal device in overlapping time, and improve quality of sidelink communication between the terminal devices.

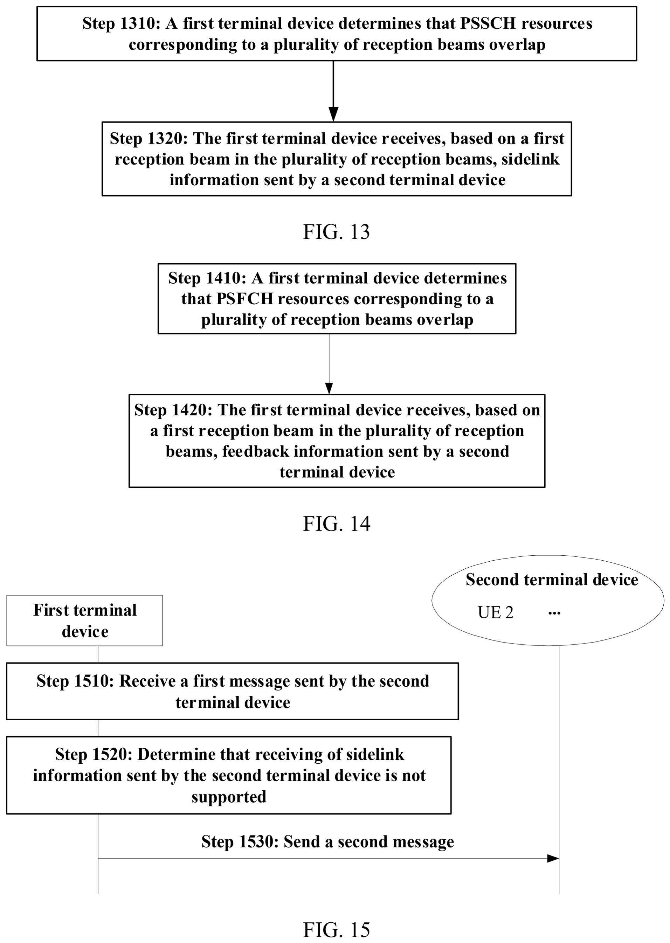

In a seventh possible implementation, the first terminal device determines that PSSCH resources corresponding to a plurality of reception beams overlap, and the first terminal device selects a first reception beam to receive sidelink information. FIG. 13 is a flowchart of a sidelink communication method according to this application. As shown in FIG. 13, the method may include the following steps.

**Step 1310: The first terminal device determines that the PSSCH resources corresponding to the plurality of reception beams overlap.**

When receiving, based on the plurality of reception beams, the sidelink information sent by the plurality of terminal devices, the first terminal device determines that the PSSCH resources corresponding to the plurality of reception beams overlap. Consequently, a conflict occurs when the first terminal device receives, based on the PSSCH resources, the sidelink information sent by the plurality of terminal devices.

For example, the first terminal device determines that reserved resources of PSSCHs corresponding to the plurality of reception beams overlap. It may be understood that overlapping may include time domain overlapping and/or frequency domain overlapping. Overlapping may also include partial overlapping or complete overlapping. The reserved resource may include a reserved retransmission resource and/or a reserved periodic resource. For example, the reserved resource is obtained by receiving SCI.

**Step 1320: The first terminal device receives, based on the first reception beam in the plurality of reception beams, sidelink information sent by the second terminal device.**

The first reception beam includes at least one of the following:
in the plurality of reception beams, a reception beam with a highest priority or M reception beams with priorities in descending order, where it may be understood that a priority of the reception beam may be a maximum value, a minimum value, or an average value of priorities of all links corresponding to the reception beam; and optionally, a smaller priority value indicates a higher priority corresponding to the priority value;
in the plurality of reception beams, a reception beam that corresponds to a maximum quantity of links or M reception beams with quantities of links in descending order;
in the plurality of reception beams, a reception beam with lowest signal quality or M reception beams with signal quality in descending order, where it may be understood that signal quality of the reception beam may be a maximum value, a minimum value, or an average value of signal quality of all links corresponding to the reception beam; and
in the plurality of reception beams, a reception beam corresponding to a longest link distance or M reception beams with longest link distances in descending order, where M is a maximum quantity of reception beams that can be simultaneously used by the first terminal device for directional reception, where it may be understood that a link distance corresponding to the reception beam may be a maximum value, a minimum value, or an average value of link distances of all links corresponding to the reception beam.

In this way, when learning in advance that PSSCH resources corresponding to the plurality of reception beams overlap, the first terminal device selects a relatively important reception beam to receive the sidelink information, to avoid a case in which the first terminal device cannot receive relatively important sidelink information because a plurality of terminal devices send sidelink information to the first terminal device in overlapping time, so that the first terminal device can select the reception beam to receive the relatively important sidelink information, to improve quality of sidelink communication between the terminal devices.

In an eighth possible implementation, the first terminal device determines that PSFCH resources corresponding to a plurality of reception beams overlap, and the first terminal device selects a first reception beam to receive feedback information. FIG. 14 is a flowchart of a sidelink communication method according to this application. As shown in FIG. 14, the method may include step 1410 and step 1420 below. A difference from the seventh possible implementation is that the priority in the reception beam may be a priority of a PSSCH corresponding to a PSFCH.

**Step 1410: The first terminal device determines that the PSFCH resources corresponding to the plurality of reception beams overlap.**

**Step 1420: The first terminal device receives the feedback information based on the first reception beam in the plurality of reception beams.**

In this way, when learning in advance that PSFCH resources corresponding to the plurality of reception beams overlap, the first terminal device selects a relatively important reception beam to receive the feedback information, to avoid a case in which the first terminal device cannot receive relatively important feedback information because a plurality of terminal devices send feedback information to the first terminal device in overlapping time, so that the first terminal device can select the reception beam to receive the relatively important sidelink information, to improve quality of sidelink communication between the terminal devices.

In a ninth possible implementation, the first terminal device determines that receiving of the sidelink information sent by the second terminal device may conflict with receiving of existing sidelink information, and rejects to establish a unicast connection. FIG. 15 is a flowchart of a sidelink communication method according to this application. As shown in FIG. 15, the method may include the following steps.

**Step 1510: The first terminal device receives a first message sent by the second terminal device.**

The first message indicates to request the second terminal device to establish a sidelink connection to the first terminal device. For example, the first message may be a direct communication request (Direct communication request) message.

**Step 1520: The first terminal device determines that receiving of the sidelink information sent by the second terminal device is not supported.**

The sidelink information may include PSSCH information/or PSFCH information. When a reception beam corresponding to the second terminal device is different from a reception beam currently used by the first terminal device, it is determined that receiving of the sidelink information sent by the second terminal device is not supported.

Optionally, a quantity of reception beams currently used by the first terminal device has reached a maximum quantity that can be supported by the first terminal device.

**Step 1530: The first terminal device sends a second message to the second terminal device.**

The second message indicates to reject establishment of the sidelink connection to the second terminal device. The second message may be a direct communication reject (Direct communication reject) message.

In this way, the first terminal device learns in advance that a new reception beam may not be able to be used to receive the sidelink information for establishing the unicast connection, and chooses to reject establishment of the unicast connection. This avoids that the first terminal device cannot receive the sidelink information sent by the second terminal device, and improves quality of sidelink communication between the terminal devices.

It may be understood that, to implement the functions in the foregoing embodiments, the terminal device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

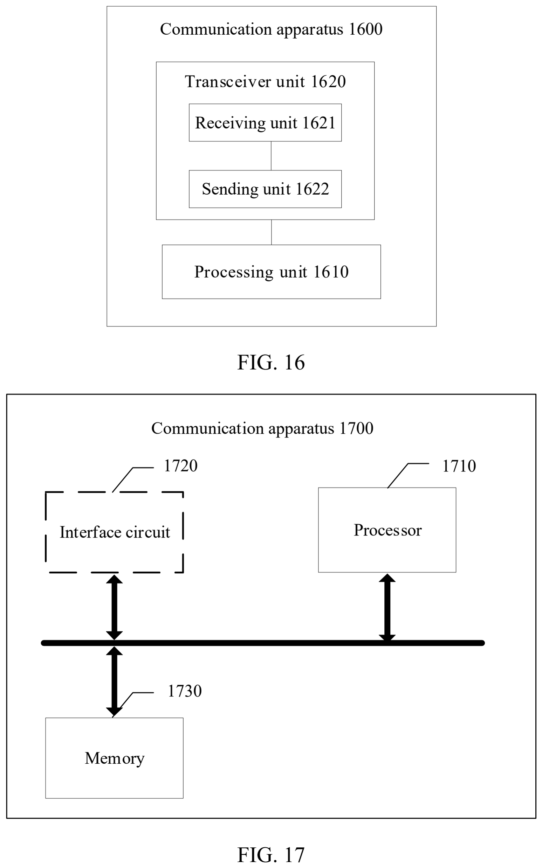

With reference to FIG. 1 to FIG. 15, the foregoing describes in detail the sidelink communication method provided in this application. With reference to FIG. 16, the following describes a communication apparatus provided in embodiments.

FIG. 16 is a diagram of a structure of a possible communication apparatus according to this application. These communication apparatuses may be configured to implement functions of the terminal device in the foregoing method embodiments. Therefore, beneficial effect of the foregoing method embodiments can also be implemented. In this application, the communication apparatus may be the first terminal device shown in FIG. 7 to FIG. 15, or may be a module (for example, a chip) used in the terminal device.

As shown in FIG. 16, the communication apparatus 1600 includes a processing unit 1610 and a transceiver unit 1620. Further, the transceiver unit 1620 may include a receiving unit 1621 and a sending unit 1622. The communication apparatus 1600 may be configured to implement functions of the first terminal device in the method embodiments shown in FIG. 7 to FIG. 15.

When the communication apparatus 1600 is configured to implement the functions of the terminal device in the method embodiment shown in FIG. 7 or FIG. 8,
the sending unit 1622 is configured to send first information, where the first information indicates time information corresponding to sidelink communication performed between a second terminal device and a first terminal device, the second terminal device includes one or a plurality of terminal devices, and the plurality of terminal devices correspond to different first information. For example, the sending unit 1622 is configured to perform step 710 in FIG. 7 or step 810 in FIG. 8.

The receiving unit 1621 is configured to receive, based on the first information, sidelink information sent by the second terminal device.

The processing unit 1610 is configured to determine that a first condition is satisfied. For example, the processing unit 1610 is configured to perform step 740 in FIG. 7 or step 820 in FIG. 8.

Optionally, the sending unit 1622 is specifically configured to send the first information when a quantity of reception beams corresponding to a first link is greater than a preset threshold, where the first link is a sidelink between the second terminal device and the first terminal device.

Optionally, the first information includes DRX assistance information.

Optionally, the plurality of terminal devices correspond to different reception beams.

When the communication apparatus 1600 is configured to implement the functions of the terminal device in the method embodiment shown in FIG. 9,
the processing unit 1610 is configured to determine IUC information, where the IUC information indicates a resource used by a second terminal device to send sidelink information to a first terminal device. For example, the processing unit 1610 is configured to perform step 910 in FIG. 9.

The sending unit 1622 is configured to send the IUC information. For example, the sending unit 1622 is configured to perform step 920 in FIG. 9.

The receiving unit 1621 is configured to receive, based on the IUC information, sidelink information sent by the second terminal device.

Optionally, the IUC information includes a non-preferred resource set or a preferred resource set, the non-preferred resource set includes a reserved resource of a third terminal device, a resource included in the preferred resource set does not overlap the reserved resource of the third terminal device, and the third terminal device performs sidelink communication with the first terminal device.

Optionally, a reception beam corresponding to the second terminal device is different from a reception beam corresponding to the third terminal device.

When the communication apparatus 1600 is configured to implement the functions of the terminal device in the method embodiment shown in FIG. 10,
the processing unit 1610 is configured to determine that a first physical sidelink feedback channel PSFCH resource of a second terminal device overlaps a PSFCH resource of a third terminal device, where the second terminal device performs sidelink communication with a first terminal device, and the third terminal device performs sidelink communication with the first terminal device. For example, the processing unit 1610 is configured to perform step 1010 in FIG. 10.

The sending unit 1622 is configured to send a second PSFCH resource, where the second PSFCH resource does not overlap the PSFCH resource of the third terminal device. For example, the sending unit 1622 is configured to perform step 1020 in FIG. 10.

The receiving unit 1621 is configured to receive, based on the second PSFCH resource, the sidelink information sent by the second terminal device. For example, the receiving unit 1621 is configured to perform step 1040 in FIG. 10.

Optionally, the first PSFCH resource is obtained based on a mapping relationship between a physical sidelink shared channel PSSCH and a PSFCH.

When the communication apparatus 1600 is configured to implement the functions of the terminal device in the method embodiment shown in FIG. 11,
the processing unit 1610 is configured to determine a first physical sidelink shared channel PSSCH resource of a second terminal device, where a PSFCH resource corresponding to the first PSSCH resource does not overlap a PSFCH resource of a third terminal device, the second terminal device performs sidelink communication with a first terminal device, and the third terminal device performs sidelink communication with the first terminal device. For example, the processing unit 1610 is configured to perform step 1110 in FIG. 11.

The sending unit 1622 is configured to send the first PSSCH resource. For example, the sending unit 1622 is configured to perform step 1120 in FIG. 11.

The receiving unit 1621 is configured to receive, based on the first PSSCH resource, the sidelink information sent by the second terminal device.

Optionally, the sidelink communication between the second terminal device and the first terminal device is hybrid automatic repeat request HARQ feedback disabled.

When the communication apparatus 1600 is configured to implement the functions of the terminal device in the method embodiment shown in FIG. 12,
the processing unit 1610 is configured to determine that a first condition is satisfied. For example, the processing unit 1610 is configured to perform step 1210 in FIG. 12.

The receiving unit 1621 is configured to receive, in a high frequency range in an omnidirectional receiving manner, sidelink information sent by a second terminal device, where the second terminal device includes one or a plurality of terminal devices. For example, the receiving unit 1621 is configured to perform step 1220 in FIG. 12.

Optionally, the first condition includes at least one of the following: signal quality corresponding to a first link is greater than or equal to a first threshold, and the first link is a sidelink between the second terminal device and a first terminal device; a distance corresponding to the first link is less than or equal to a second threshold; a priority corresponding to the first link is lower than or equal to a first priority; a quantity of reception beams corresponding to the first link is greater than a third threshold; and an interest in receiving the sidelink information in a multicast or broadcast manner.

Optionally, the third threshold is a maximum quantity of reception beams that can be simultaneously used by the first terminal device for directional reception.

When the communication apparatus 1600 is configured to implement the functions of the terminal device in the method embodiment shown in FIG. 13 or FIG. 14,
the processing unit 1610 is configured to determine that resources corresponding to a plurality of reception beams overlap. For example, the processing unit 1610 is configured to perform step 1310 in FIG. 13 or step 1410 in FIG. 14.

The sending unit 1622 is configured to send sidelink information.

The receiving unit 1621 is configured to receive, based on a first reception beam in the plurality of reception beams, sidelink information sent by the second terminal device. For example, the receiving unit 1621 is configured to perform step 1320 in FIG. 13 or step 1420 in FIG. 14.

Optionally, the resource includes one of a physical sidelink shared channel PSSCH resource and a physical sidelink feedback channel PSFCH resource.

Optionally, the first reception beam includes at least one of the following: in the plurality of reception beams, a reception beam with a highest priority or M reception beams with priorities in descending order; in the plurality of reception beams, a reception beam that corresponds to a maximum quantity of links or M reception beams with quantities of links in descending order; in the plurality of reception beams, a reception beam with lowest signal quality or M reception beams with signal quality in descending order; and in the plurality of reception beams, a reception beam corresponding to a longest link distance or M reception beams with longest link distances in descending order, where M is a maximum quantity of reception beams that can be simultaneously used by the first terminal device for directional reception.

When the communication apparatus 1600 is configured to implement the functions of the terminal device in the method embodiment shown in FIG. 15,
the receiving unit 1621 is configured to receive a first message sent by a second terminal device, where the first message indicates to request to establish a sidelink connection to a first terminal device. For example, the receiving unit 1621 is configured to perform step 1510 in FIG. 15.

The processing unit 1610 is configured to determine that receiving of sidelink information sent by the second terminal device is not supported. For example, the processing unit 1610 is configured to perform step 1520 in FIG. 15.

The sending unit 1622 is configured to send a second message, where the second message indicates to reject establishment of the sidelink connection to the second terminal device. For example, the sending unit 1622 is configured to perform step 1530 in FIG. 15.

Optionally, the processing unit 1610 is specifically configured to: when a reception beam corresponding to the second terminal device is different from a reception beam currently used by the first terminal device, determine that receiving of the sidelink information sent by the second terminal device is not supported.

The communication apparatus 1600 in this embodiment of this application may correspondingly perform the method described in embodiments of this application. In addition, the foregoing and other operations and/or functions of the units in the communication apparatus 1600 are separately used to implement corresponding procedures of the methods in FIG. 7 to FIG. 15. For brevity, details are not described herein again.

As shown in FIG. 17, the communication apparatus 1700 includes a processor 1710 and an interface circuit 1720. The processor 1710 and the interface circuit 1720 are coupled to each other. It may be understood that the interface circuit 1720 may be a transceiver or an input/output interface. Optionally, the communication apparatus 1700 may further include a memory 1730, configured to: store instructions to be executed by the processor 1710, store input data required by the processor 1710 to run instructions, or store data generated after the processor 1710 runs the instructions.

When the communication apparatus 1700 is configured to implement the methods shown in FIG. 7 to FIG. 15, the processor 1710 is configured to perform the functions of the processing unit 1610, and the interface circuit 1720 is configured to perform the functions of the transceiver unit 1620.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It can be understood that the processor in the embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. In the specification, claims, and accompanying drawings of this application, the terms "first", "second", "third", and the like are intended to distinguish between different objects but do not limit a particular order. In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A sidelink communication method, comprising:
sending first information, wherein the first information indicates time information corresponding to sidelink communication performed between a second terminal device and a first terminal device, the second terminal device comprises one or a plurality of terminal devices, and the plurality of terminal devices correspond to different first information; and
receiving, based on the first information, sidelink information sent by the second terminal device.

2. The method according to claim 1, wherein sending the first information comprises:
sending the first information when a quantity of reception beams corresponding to a first link is greater than a preset threshold, wherein the first link is a sidelink between the second terminal device and the first terminal device.

3. The method according to claim 1 or 2, wherein the first information comprises discontinuous reception DRX assistance information.

4. The method according to any one of claims 1 to 3, wherein the plurality of terminal devices correspond to different reception beams.

5. A sidelink communication method, comprising:
determining inter-user equipment coordination IUC information, wherein the IUC information is used by a second terminal device to determine a resource used for sending sidelink information to a first terminal device; and
sending the IUC information to the second terminal device.

6. The method according to claim 5, wherein the IUC information comprises a non-preferred resource set or a preferred resource set, the non-preferred resource set comprises a reserved resource of a third terminal device, a resource comprised in the preferred resource set does not overlap the reserved resource of the third terminal device, and the third terminal device performs sidelink communication with the first terminal device.

7. The method according to claim 6, wherein a reception beam corresponding to the second terminal device is different from a reception beam corresponding to the third terminal device.

8. A sidelink communication method, comprising:
determining that a first physical sidelink feedback channel PSFCH resource of a second terminal device overlaps a PSFCH resource of a third terminal device, wherein the second terminal device performs sidelink communication with a first terminal device, and the third terminal device performs sidelink communication with the first terminal device; and
sending a second PSFCH resource to the second terminal device, wherein the second PSFCH resource does not overlap the PSFCH resource of the third terminal device.

9. The method according to claim 8, wherein the first PSFCH resource is obtained based on a mapping relationship between a physical sidelink shared channel PSSCH and a PSFCH.

10. A sidelink communication method, comprising:
determining a first physical sidelink shared channel PSSCH resource of a second terminal device, wherein a PSFCH resource corresponding to the first PSSCH resource does not overlap a PSFCH resource of a third terminal device, the second terminal device performs sidelink communication with a first terminal device, and the third terminal device performs sidelink communication with the first terminal device; and
sending the first PSSCH resource to the second terminal device.

11. The method according to claim 10, wherein the sidelink communication between the second terminal device and the first terminal device is hybrid automatic repeat request HARQ feedback disabled.

12. A sidelink communication method, comprising:
determining that a first condition is satisfied; and
receiving, in a high frequency range in an omnidirectional receiving manner, sidelink information sent by a second terminal device, wherein the second terminal device comprises one or a plurality of terminal devices.

13. The method according to claim 12, wherein the first condition comprises at least one of the following:
signal quality corresponding to a first link is greater than or equal to a first threshold, and the first link is a sidelink between the second terminal device and a first terminal device;
a distance corresponding to the first link is less than or equal to a second threshold;
a priority corresponding to the first link is lower than or equal to a first priority;
a quantity of reception beams corresponding to the first link is greater than a third threshold; and
an interest in receiving the sidelink information in a multicast or broadcast manner.

14. The method according to claim 13, wherein the third threshold is a maximum quantity of reception beams that can be simultaneously used by the first terminal device for directional reception.

15. A sidelink communication method, comprising:
determining that resources corresponding to a plurality of reception beams overlap; and
receiving sidelink information based on a first reception beam in the plurality of reception beams.

16. The method according to claim 15, wherein the resource comprises one of a physical sidelink shared channel PSSCH resource and a physical sidelink feedback channel PSFCH resource.

17. The method according to claim 15 or 16, wherein the first reception beam comprises at least one of the following:
in the plurality of reception beams, a reception beam with a highest priority or M reception beams with priorities in descending order;
in the plurality of reception beams, a reception beam that corresponds to a maximum quantity of links or M reception beams with quantities of links in descending order;
in the plurality of reception beams, a reception beam with lowest signal quality or M reception beams with signal quality in descending order; and
in the plurality of reception beams, a reception beam corresponding to a longest link distance or M reception beams with longest link distances in descending order, wherein M is a maximum quantity of reception beams that can be simultaneously used by a first terminal device for directional reception.

18. A sidelink communication method, comprising:
receiving a first message sent by a second terminal device, wherein the first message indicates to request to establish a sidelink connection to a first terminal device;
determining that receiving of sidelink information sent by the second terminal device is not supported; and
sending a second message, wherein the second message indicates to reject establishment of the sidelink connection to the second terminal device.

19. The method according to claim 18, wherein determining that receiving of the sidelink information sent by the second terminal device is not supported comprises:
when a reception beam corresponding to the second terminal device is different from a reception beam currently used by the first terminal device, determining that receiving of the sidelink information sent by the second terminal device is not supported.

20. A communication apparatus, comprising a module configured to perform the method according to any one of claims 1 to 4, or comprising a module configured to perform the method according to any one of claims 5 to 7, or comprising a module configured to perform the method according to either of claims 8 and 9, or comprising a module configured to perform the method according to either of claims 10 and 11, or comprising a module configured to perform the method according to any one of claims 12 to 14, or comprising a module configured to perform the method according to any one of claims 15 to 17, or comprising a module configured to perform the method according to either of claims 18 and 19.

21. A communication apparatus, comprising a processor and a memory, wherein the memory is configured to store one or more computer programs; and when executing the one or more computer programs, the processor performs the method according to any one of claims 1 to 4, or performs the method according to any one of claims 5 to 7, or performs the method according to either of claims 8 and 9, or performs the method according to either of claims 10 and 11, or performs the method according to any one of claims 12 to 14, or performs the method according to any one of claims 15 to 17, or performs the method according to either of claims 18 and 19.

22. A communication system, wherein the communication system comprises a plurality of terminal devices, and the terminal device is configured to perform the method according to any one of claims 1 to 19, to implement sidelink communication between the plurality of terminal devices.
